# EUROPEAN PATENT APPLICATION

(11) **EP 2 045 032 A1**
(43) Date of publication of application: **08.04.2009**
(21) Application number: 07253942.2
(22) Date of filing: 04.10.2007
(51) Int. Cl.: B23D 21/00, B23D 33/08, B23D 33/02

(54) **Tube cutting device and method thereof**

(71) Applicant: Institute of Nuclear Energy Research Atomic Energy Council, Executive Yuan, Taoyuan County 32546 (TW)
(72) Inventor: Yu, Yu-Huang, Longtan Township Taoyuan County (TW); Chang, Cheng-Han, Longtan Township Taoyuan County (TW); Shyu, Jong-Shu, Longtan Township Taoyuan County (TW); Liu, Yuh-Hui, Longtan Township Taoyuan County (TW); Lin, Taing-Yi, Longtan Township Taoyuan County (TW); Tieng, Shen-Yueh, Longtan Township Taoyuan County (TW); Chiu, Wan-June, Longtan Township Taoyuan County (TW)
(74) Representative: Gillard, Matthew Paul

(57) **Abstract**

A tube cutting device and method thereof are disclosed, which are adapted for performing a remote tube cutting operation upon a tube. The tube cutting device is comprised of: a holding unit; a cutting unit; and a control unit, connected to the holding unit and the cutting unit in a remote manner; wherein, the control unit is capable of directing the holding unit to hold and move a tube to a specific position and thereafter directing the cutting unit to perform a cutting operation upon the tube. With the aforesaid tube cutting device, an operator operating the tube cutting device can perform an cutting operation upon the tube remotely without having to contact directly with the tube, and thus the operator is prevented from having to stay in a working environment containing hazardous materials, such as radioactive pollutants, gas/liquid with strong acid or alkali, etc., so that the safety of the tube cutting operation can be enhanced. In addition, as the tube cutting device is simple in structure, the manufacturing cost thereof is comparatively low but still possess high cutting efficiency.

## Description

### FIELD OF THE INVENTION

The present invention relates to a tube cutting device, and more particularly, to an apparatus capable of performing a remote tube cutting operation upon a tube in a rapid manner, by which direct contacting with the tube or other tube-relating components can be prevented and thus an operator operating the tube cutting device is prevented from having to stay in a working environment containing hazardous materials, so that the safety of the tube cutting operation can be enhanced and therefore the tube cutting device is especially suitable for applications involving working in environment of radioactive pollutants, gas/liquid with strong acid/alkali, etc..

### BACKGROUND OF THE INVENTION

The implementation of the safety policy on site for ensuring a safe working environment is becoming a common sense, since most industries had realized that a safe working environment not only can minimizing the chance that its workers is suffered by work-related health and safety problems, but also can minimizing the difficulty of maintaining an instrument as it can be free from being contaminated by pollutants of its working environment.

Taking a highly radioactive nuclear reactor in a nuclear power plant for instance, it is commonly designed with at least a passageway provided for at least a hollow sleeve to insert therefrom and reach the reactor core, through each of which a neutron monitor can approach the fuel bundle at the reactor core to be used for monitoring the uniformity of neutrons being distributed in fuel bundle so as to ensure that the fuel bundle is reacting normally. It is noted that the sleeve can be deformed or damaged after being used for a period of time and thus requires to be replaced for facilitating the smooth passing of the neutron monitor. However, as a common sleeve of 35m long is highly radioactive at the portion thereof that is positioned near the neighborhood of the reactor core and is about 8m long, a specially designed cutting equipment must be used for performing a cutting operation under the water surface of the reactor core, by which the highly radioactive portion of the sleeve can be cut and divided into sections of specific length capable of being transported by carrier to a designated location to be processed.

It is specified by regulation that the under water cutting operation must be performed at the position at least 8m below the water surface. Thus, those currently available cutting equipments capable of such operation can be very expensive. In addition, as there can be as many as fifty sleeves in a nuclear reactor, the cutting operation can be time consuming that can slow down the whole reactor maintenance procedure.

Therefore, it is in need of a simple-structured, low-cost tube cutting device, capable of performing a rapid cutting operation upon a tube while the tube is disposed in a working environment containing hazardous materials/pollutants or is a component of a radioactive apparatus.

### SUMMARY OF THE INVENTION

In view of the disadvantages of prior art, the object of the present invention is a tube cutting device capable of performing a remote tube cutting operation upon a tube in a rapid manner, by which direct contacting with the tube or other tube-relating components can be prevented and thus an operator operating the tube cutting device is prevented from having to stay in a working environment containing hazardous materials, so that the safety of the tube cutting operation can be enhanced.

It is another object of the invention to provide a simple-structured, low-cost tube cutting device with high cutting efficiency.

To achieve the above objects, the present invention provides a tube cutting device, comprising: a holding unit; a cutting unit; and a control unit, connected to the holding unit and the cutting unit in a remote manner; wherein, the control unit is capable of directing the holding unit to hold and move a tube to a specific position and thereafter enabling the cutting unit to perform a remote tube cutting operation upon the tube by directions of an operator of the tube cutting device.

Other aspects and advantages of the present invention will become apparent from the following detailed description, taken in conjunction with the accompanying drawings, illustrating by way of example the principles of the present invention.

### BRIEF DESCRIPTION OF THE DRAWINGS

FIG. 1A is a top view of a tube cutting device according to a preferred embodiment of the invention.

FIG. 1B is a front view of the tube cutting device of FIG. 1A.

FIG. 2A is a top view of a holding unit used in a tube cutting device of the invention.

FIG. 2B is a front view of the holding device of FIG. 2A.

FIG. 2C is an A-A sectional view of the holding device of FIG. 2A.

FIG. 3A to FIG. 3C are schematic diagrams depicting consecutive movements of a tube cutting device of the invention as it is performing a tube cutting operation.

FIG. 4A and FIG. 4B show respectively a top and a front view of a tube cutting device according to another preferred embodiment of the invention.

FIG. 5A to FIG. 5F are schematic diagrams depicting consecutive movements of a tube cutting device of the invention as it is performing a remote tube cutting operation in a nuclear reactor of a nuclear power plant.

### DESCRIPTION OF THE PREFERRED EMBODIMENT

For your esteemed members of reviewing committee to further understand and recognize the fulfilled functions and structural characteristics of the invention, several preferable embodiments cooperating with detailed description are presented as the follows.

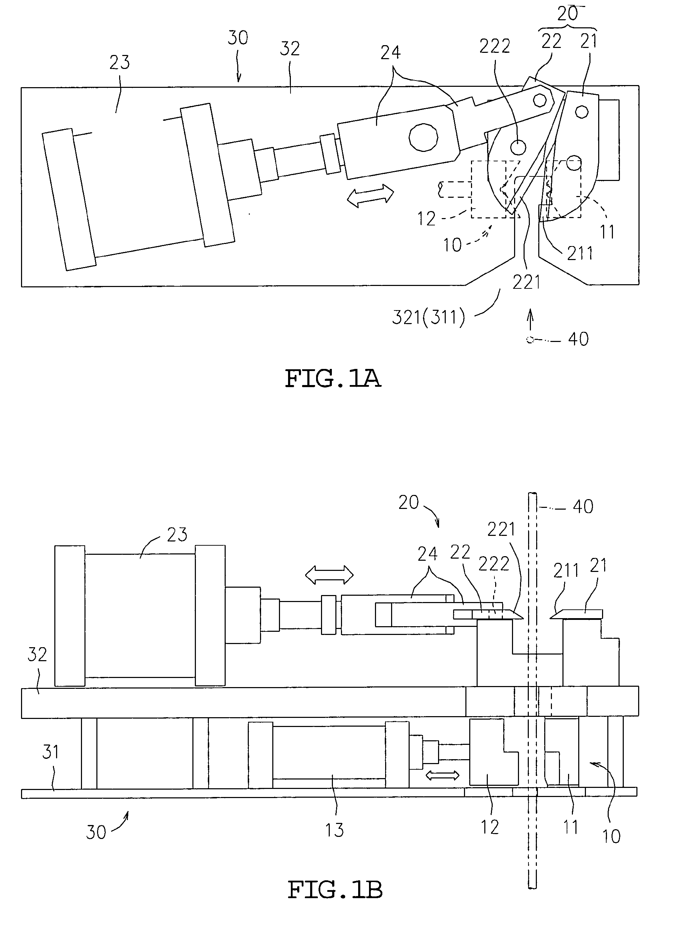

As seen in FIG. 1A and FIG. 1B, a tube cutting device is comprised of a holding unit 10, a cutting unit 20 and a control unit. Both the holding unit 10 and the cutting unit 20 are mounted on a frame 30, while the holding unit 10 arranged at a lower layer 31 of the frame 30 and the cutting unit 20 is arranged at an upper layer 32 of the frame 30. The frame 30 can be driven to perform a reciprocating motion while bringing along both the holding unit 10 and the cutting unit 20 to move synchronously.

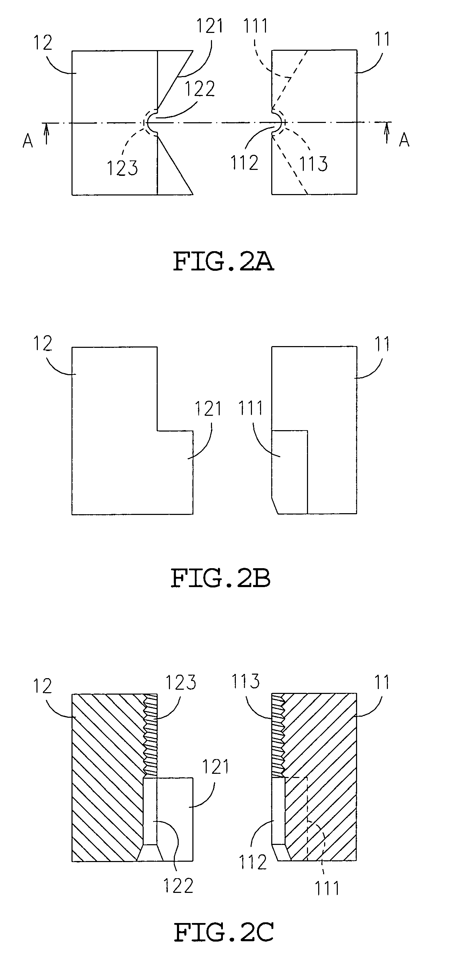

As seen in FIGs. 1A ∼ 2C, the holding unit 10, adapted for clipping upon a tube 40, is comprised of a fixing part 11 and a mobile part 12. The fixing part 11 is fixedly mounted on the frame 30 while the mobile part 12, connected to a hydraulic device 13, can be driven to perform a reciprocating motion to move in relative to the fixing part 11. In addition, the reciprocating motion of the mobile part 12 is performed following a direction perpendicular to an axial direction of the tube 40, and the hydraulic device 13 can be replaced by a pneumatic means, a wireless electrical actuation device or a wired electrical actuation device. In another preferred embodiment, even the fixing part 11 is connected to a driving device for enabling the same to also perform a reciprocating motion, only if the reciprocating fixing part 11 is able to moved in relative to the reciprocating mobile part 12. Furthermore, as seen in FIGs. 2A ∼ 2C, an inset structure with matching ramp structure 111 and ridge structure 121, being formed respectively on surfaces of the fixing part 11 and the mobile part 12 facing toward each other in a manner that the tube 40 is guided by the slope of the ridge structure 121 to be located between the fixing part 11 and the mobile part 12. The extending directions of both the ramp structure 111 and the ridge structure 121 are parallel to an axial direction of the tube 40. Moreover, matching concaves 112, 122 are formed respectively on surfaces of the fixing part 11 and the mobile part 12 facing toward each other in a manner that the tube 40 can be fixedly hold inside the matching concaves 112, 122 as the mobile part 12 approaches the fixing part 11. An abrasive structure including two abrasives 113, 123 is formed on the matching concaves 112, 122 for providing a specific friction to the tube 40 being hold therebetween. With the aforesaid structures, when the mobile part 12 approaches the fixing part 11, the tube 40 is guided by the slope of the ridge structure 121 to be located between matching concaves 112, 122 of the fixing part 11 and the mobile part 12 and thus, as the approaching of the mobile part 12 toward the fixing part 11 enabling the matching concaves 112, 122 to firmly grasp the tube 40, the friction provided by the abrasives 113, 123 of the abrasive structure will prevent the tube 40 from slipping axially. It is noted that the abrasive structure is an embossed pattern manufactured by a roll embossing means and, preferably, is manufactured for enabling the resulting friction to function in parallel to the axial direction of the tube 40. Thereby, the tube 40 can be tightly secured between the fixing part 11 and the mobile part 12.

As seen in FIG. 1A and FIG. 1B, the cutting unit 20, adapted for cutting the tube 40, is also comprised of a fixing part 21 and a mobile part 22; wherein two blades 211, 221 of a blade structure are respectively formed on surfaces of the fixing part 21 and the mobile part 22 facing toward each other. The fixing part 21 is fixedly mounted on the frame 30 while the mobile part 22 is mounted on the frame 30 in a manner that an end thereof is connected to a hydraulic device 23 through a linage rod 24. As the mobile part 22 can be driven to pivot about its pivotal axle 222 while the linage rod 24 is driven to move by the hydraulic device 23, the blade 221 will be bring along to approach toward/depart from another blade 211, and thus the blade structure can act as a scissor capable of exerting a cutting force upon the tube 40 perpendicular to the axial direction of the tube 40. Similarly, the hydraulic device 23 can be replaced by a pneumatic means, a wireless electrical actuation device or a wired electrical actuation device. In another preferred embodiment, even the fixing part 11 is connected to a driving device for enabling the same to also perform a reciprocating motion, only if the reciprocating fixing part 11 is able to moved in relative to the reciprocating mobile part 12. In another preferred embodiment, even the fixing part 21 is connected to a driving device for enabling the same to also perform a reciprocating motion, only if the reciprocating fixing part 21 is able to moved in relative to the reciprocating mobile part 22.

Again as seen in FIG. 1A and FIG. 1B, there are two openings 311, 321 formed respectively on the frame 30 at positions corresponding respectively to the holding unit 10 and the cutting unit 20 in a manner that the tube 40 can be received inside the frame 30 through the two openings 311, 321 and approached by the holding unit 10 and the cutting unit 20. In addition, each of the two openings 311, 321 is formed as a funnel, tapering from an edge of the frame 30 and extending toward a neighborhood of any one of the holding unit 10 and cutting unit 20 whichever it is corresponding to so that the tube 40 can be received inside the frame 30 through the two openings 311, 321 and thus approach the holding unit 10 and the cutting unit 20.

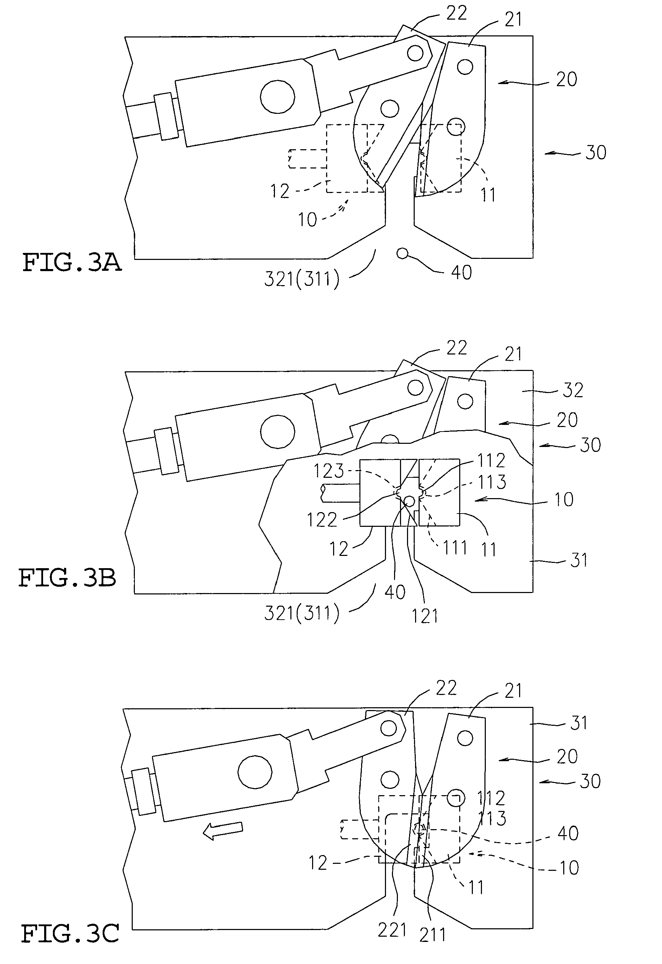

Please refer to FIG. 3A and FIG. 3C, which are schematic diagrams depicting consecutive movements of a tube cutting device of the invention as it is performing a tube cutting operation. In FIG. 3A, as the tube 40 is usually fixed at a specific location, it is intended to move the holding unit 10 and the cutting unit 20 to approach the tube 40; and as both the holding unit 10 and the cutting unit 20 are all being mounted on the frame 30, the holding unit 10 and the cutting unit 20 can be moved synchronously by only driving the frame 30 to move. Thereby, the tube 40 can be guided and received inside the frame 30 through the tapering openings 311, 321 following the slopes thereof.

In FIG. 3B, after the tube enters the frame 30 and is being sandwiched between the fixing part 11 and the mobile part 12 of the holding unit 10, the mobile part 12 is being driven to move approaching the fixing part 11, the tube 40 is guided by the slopes of the ramp structure 111 and the ridge structure 121 to be located between matching concaves 112, 122 of the fixing part 11 and the mobile part 12 and thus, as the approaching of the mobile part 12 toward the fixing part 11 enabling the matching concaves 112, 122 to firmly grasp the tube 40, the friction provided by the abrasives 113, 123 of the abrasive structure will prevent the tube 40 from slipping axially. The same time that as soon as the tube 40 is tightly grasped by the holding unit 10, it is being positioned right between the fixing part 20 and the mobile part 22 of the cutting unit 20.

In FIG. 3C, when the tube 40 is tightly grasped by the holding unit 10, the mobile part 22 is driven to move approaching the fixing part 21 until the blade 221 of the mobile part 22 comes into contact with the blade 211 of the fixing part 21, and thus cuts the tube 40. After the cutting, the mobile part 22 is being driven to move away from the fixing part 21 so as to those of the holding unit 10 for releasing the tube 40. By the repeating of the aforesaid approaching/separating of the mobile parts and the fixing parts of both the holding unit 10 and the cutting unit 20, a tube cutting operation can be performed repeatedly upon the tube 40.

It is noted that the aforesaid actuations of the holding unit 10 and the cutting unit 20 can be controlled manually, automatically, or semiautomatically by a control unit. The characteristic of the invention is that the control unit is able to connect and control the holding unit and the cutting unit in a remote manner. Thus, knowing to those skilled in the art, the control unit can be programmed by a control software and connected to the holding unit and the cutting unit by a wired means or wireless means, so as to execute functions of actuating, parameter configuring, displacement setting, and so on.

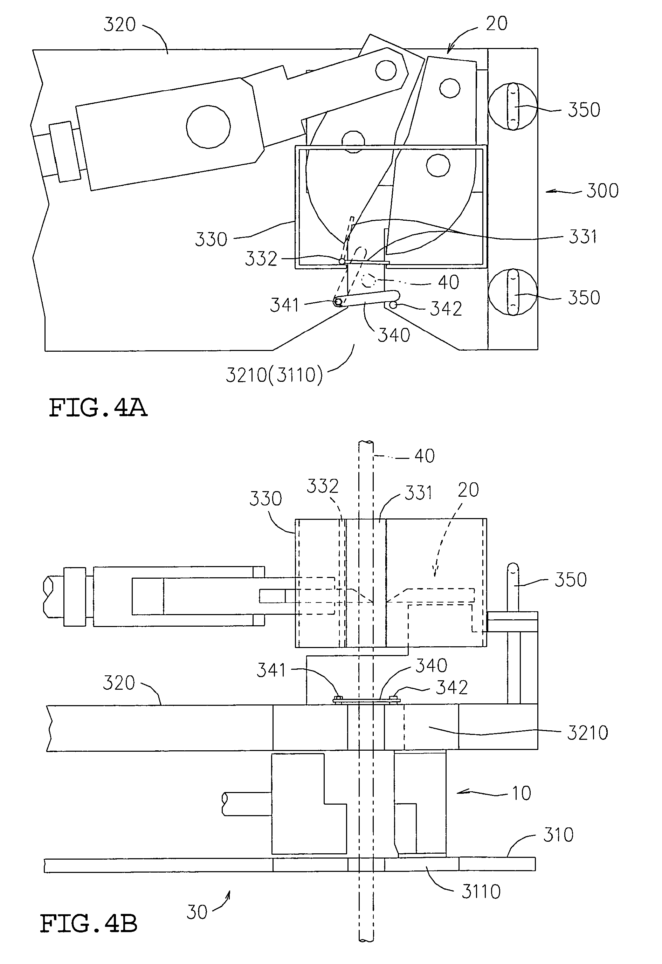

Please refer to FIG. 4A and FIG. 4B, which show respectively a top and a front view of a tube cutting device according to another preferred embodiment of the invention. The frame 300 is similar to the frame 30 shown in FIG. 1A and FIG. 1B, however, it is different in that a protective cover 330 is mounted on upper layer 320 of the frame 300 at a position corresponding to the cutting unit 20 in a manner that the cutting unit 20 is enveloped by the protective cover 330 for blocking the spattering of debris resulting from the performing a tube cutting operation upon the tube 40. In addition, a one-way door 331 is formed on the protective cover 330 and pivotally connected thereto by an elastic axle 332 in a manner that the one-way door 331 is enabled to only open toward the direction of the cutting unit 20 for allowing the tube 40 to enter the protective cover 330 and thus reach the cutting unit 20 while acting as a block for securing the received tube 40 inside the protective cover 330. Similarly, a one-way bearing 340 is arranged on the low layer 310 of the frame 300 at a position near the mouth 3110 of the funnel-shaped opening 311 in a manner that the one-way bearing 340 is connected to lower layer 310 of the frame 300 by an elastic axle 341 for enabling the one-way bearing 340 to only open toward the holding unit 10 and thus allowing the tube 40 to enter the opening 311 while using a block 342 to secure the received tube 40 in the frame 300. It is noted that the one-way bearing 340 is working the same as that of the one-way door 332 that is capable of limiting and securing the tube 40 from exiting from its corresponding opening. Moreover, there are hangers 350 symmetrically disposed upon the upper layer 320 of the frame 300 to be hooker by hooks, by which the frame 300 can be hooked by a driving device and moved thereby while bringing along the holding unit 10 and the cutting unit 20 to move therewith in a synchronized manner. Similarly, aforesaid actuations of the frame 300 can also be controlled manually, automatically, or semiautomatically by the control unit.

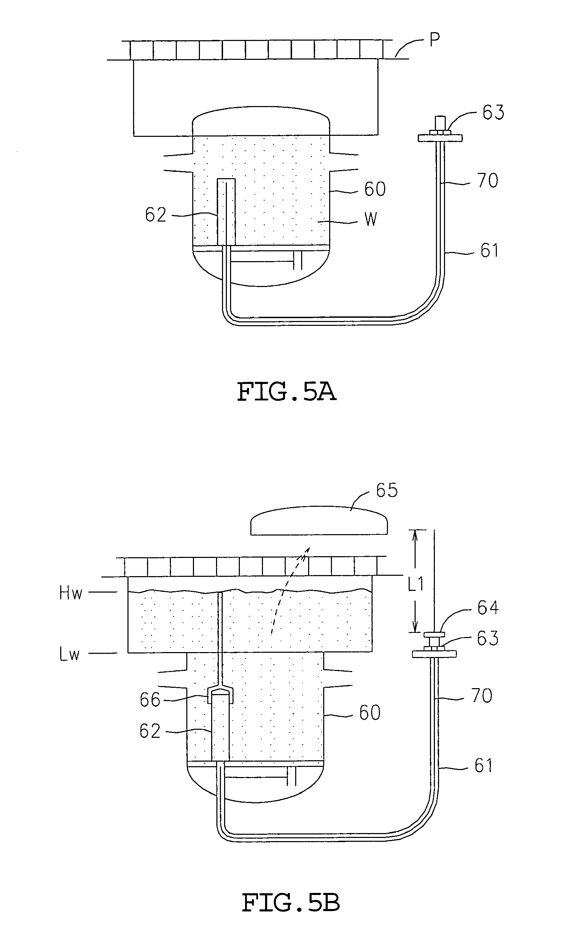

Please refer to FIG. 5A to FIG. 5F, which are schematic diagrams depicting consecutive movements of a tube cutting device of the invention as it is performing a remote tube cutting operation in a nuclear reactor of a nuclear power plant. In a nuclear reactor 60 shown in FIG. 5A, a passageway 61 is provided for a hollow sleeve 70 to insert therefrom and reach its reactor core, through which a neutron monitor can approach the fuel bundle 62 at the reactor core to be used for monitoring the uniformity of neutrons being distributed in fuel bundle 62. The fuel bundle 62 is submerged in the filling water ***W*** of the reactor 60. A sealing plate 63 is arranged at an end of the passageway away from and outside the reactor 60 for sealing the passageway 61. There is a platform ***P*** arranged for allowing operators to stand thereon.

As seen in FIG. 5B, before replacing the sleeve 70, the level of the filling water must be dropped to the position specified as Lw. After the water level is dropped to the ***Lw*** position, a low-pressure sealing ring 64 is installed on the sealing plate 63 and then the sleeve 70 is pulled out of the reactor by a specific length ***L1**,* preferably to be about 7m. Thereafter, the water level is raised to reach a ***Hw*** level, and then the lid 65 of the reactor 60 can be removed so that the fuel bundle 62 can be retrieved from the reactor 60 by the use of a hanger.

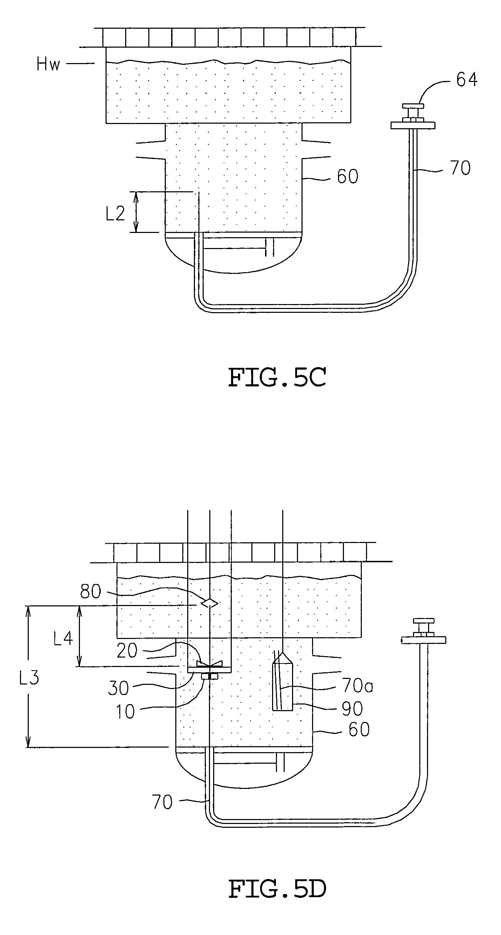

In FIG. 5C, the sleeve 70 is pushed into the reactor 60 by a specific length ***L2***, which is shorter than ***L1**,* so that the portion of the sleeve 70 still extruding outside the sealing ring 64 must be cut off. After cutting off the extruding sleeve 70, the water level of the reactor 60 is raised to reach the ***Hw*** level.

In FIG. 5D, a movable clipping part 80 is dropped and enters the interior of the reactor 60 for holding and pulling the sleeve 70 to move by a specific length ***L3***, and the same time that a storage tank 90 is movably placed inside the reactor 60 and then the frame 30 having the holding unit 10 and the cutting unit 20 mounted thereon is also being placed inside the reactor 60 at a designated location thereof. It is noted that the designated location is apart away from the top of the sleeve 70 by a specific length ***L4***. Thereafter, the holding unit 10 is driven to hold and secure the sleeve 70 and then the cutting unit 20 can be driven to perform a tube cutting operation upon the sleeve 70. The cut-off piece of the sleeve 70 is then being transported to the storage tank 90 for storage by the movable clipping part 80. As for the length ***L4***, it is determined depending upon the cut-off length of the sleeve 70 required by actual needs as well as the location of the movable clipping part 80 and the length of the sleeve 70. By the repeating of the aforesaid procedure, the sleeve 70 can be cut into a plurality of sections and as the sleeve ensheathed by the fuel bundle 62 is about 8m, as seen in FIG. 5A, it is common to cut off three sections of 3.9m in length from the sleeve 70. Usually, a radioactive measurement is performed upon the third section, and if the detected radioactivity is higher than a predefined level, the cut-off sections will be preserved in the storage tank 90 submerging under the water level of the reactor for preventing radioactive leakage, and if it is lower, the cut-off sections can be retrieved and store in a storage tank disposed outside the reactor while remove all the rest sleeve 70 out of the reactor directly to be cut manually outside the reactor 60, so the efficiency of the sleeve replacement operation can be enhanced.

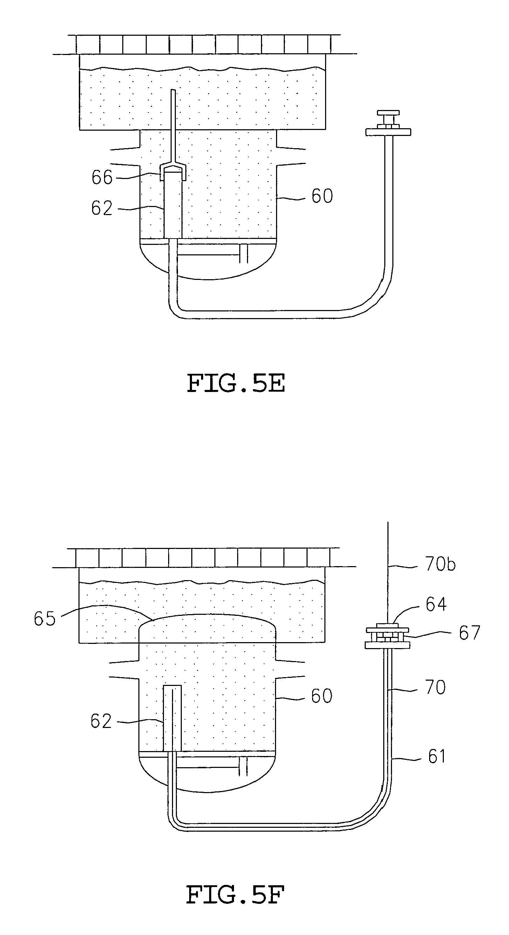

In FIG. 5E, the fuel bundle 62 is put back into the reactor 60 by the hanger 66.

In FIG. 5F, after putting back the fuel bundle 62 into the reactor 60, the water level is dropped again and the lid 65 is covered on top of the reactor 60. Thereafter, a new sleeve 70 is inserted into the reactor 60 and reaches the fuel bundle 62 through the passageway 62. Preferably, a rectifier 67 is disposed at the sealing ring 64 for performing a calibration operation upon the sleeve 70 so as to enabling the sleeve 70 to enter the passageway 61 straightly. After completing the inserting of the sleeve 70, the excess portion 70b of the sleeve extruding outside the rectifier 67 is cut off and then the rectifier 67 and the sealing ring 64 is removed so that the status of the reactor 60 is the same as that seen in FIG. 5A.

By the repeating of the aforesaid procedures, the sleeve can be cut continuously, and it is noted that all the actuations relating to the component used in the aforesaid procedures can all be controlled by the abovementioned control unit in a remote manner. For nuclear reactor, as all its operations are performed under water, it is required to have a monitoring unit capable of operating under water for monitoring the statuses and operations of every components of the nuclear reactor while transmitting results of the monitoring to a display device of the abovementioned control unit. In addition, an illumination unit can be provided and used for illumination. Moreover, an imaging unit, such as a camera or a camcorder, can be provided for imaging actuations of the nuclear reactor. For those skilled in the art, it is noted that all the aforesaid monitoring unit, display device, illumination unit and the imaging unit can be connected to the control unit by a wired manner or a wireless manner. Furthermore, in order to adapted the tube cutting device of the invention to operate under water, all the aforesaid unit including the holding unit and the cutting unit must be water-proof and capable of resisting to a specific hydraulic pressure. Similarly, if the tube cutting device of the invention is required to operate in a working environment of high acidity or alkalinity, all its components exposing to such acid or alkali environment should be capable of resisting to such high acidity or alkalinity, and thus should be made of materials with such ability.

To sum up, the present invention provides a tube cutting device capable of performing a remote tube cutting operation upon a tube in a rapid manner, by which direct contacting with the tube or other tube-relating components can be prevented and thus an operator operating the tube cutting device is prevented from having to stay in a working environment containing hazardous materials, so that the safety of the tube cutting operation can be enhanced and therefore the tube cutting device is especially suitable for applications involving working in environment of radioactive pollutants, gas/liquid with strong acid/alkali, and so on. Except for the nuclear reactor referred in the embodiment described hereinbefore, the tube cutting device of invention can be adapted for operating in other working environment containing hazardous materials, such as radioactive pollutants, gas/liquid with strong acid or alkali, etc.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments which do not depart from the spirit and scope of the invention.

## Claims

1. A tube cutting device, adapted for performing a remote tube cutting operation upon a tube, comprising:
a holding unit(10), for holding the tube;
a cutting unit(20), for cutting the tube; and
a control unit, connected to the holding unit(10) and the cutting(20) unit in a remote manner for controlling the actuations of the holding unit(10) and the cutting unit.(20)

2. The tube cutting device of claim 1, wherein the holding unit(10) further comprises a movable clipping part, used for holding and pulling to move the tube by a specific length.

3. The tube cutting device of claim 1, wherein the movable clipping parties capable of pulling the tube(40) to move following an axial direction of the tube(40).

4. The tube cutting device of claim 1, wherein the holding unit(10) further comprises:
a fixing part(11), and
a mobile part(12), capable of moving relative to the fixing part(11).

5. The tube cutting device of claim 4, wherein the mobile part(12) is driven to perform a reciprocating motion by a means selected from the group consisting of: a pneumatic means, a hydraulic means, a wireless electrical actuation device and a wired electrical actuation device.

6. The tube cutting device of claim 5, wherein the reciprocating motion is performed following a direction perpendicular to an axial direction of the tube(40).

7. The tube cutting device of claim 4, wherein an inset structure with matching ramp structure(111) and ridge structure(121), being formed respectively on surfaces of the fixing part(11) and the mobile part(12) facing toward each other in a manner that the tube (40) is guided by the slope of the ridge structure(121) to be located between the fixing part (11) and the mobile part(12).

8. The tube cutting device of claim 7, wherein the ridge structure(121) is arranged on the mobile part (12) while the ramp structure(111) is arranged on the fixing part(11).

9. The tube cutting device of claim 7, wherein any one of the ridge structure(121) and ramp structure (111) is extending along a direction parallel to an axial direction of the tube(40).

10. The tube cutting device of claim 4, wherein matching concaves(112,122) are formed respectively on surfaces of the fixing part(11) and the mobile part(12) facing toward each other in a manner that the tube (40) can be fixedly hold inside the matching concaves(112,122) as the mobile part (12) approaches the fixing part(11).

11. The tube cutting device of claim 10, wherein an abrasive structure(113,123) is formed on the matching concaves(112,122) for providing a specific friction to the tube(40) being hold therebetween.

12. The tube cutting device of claim 11, wherein the abrasive structure (113,123)is an embossed pattern manufactured by a roll embossing means.

13. The tube cutting device of claim 1, wherein the cutting unit(20) further comprises:
a fixing part(11); and
a mobile part(12), capable of moving relative to the fixing part(11).

14. The tube cutting device of claim 13, wherein the mobile part(12) is driven to perform a reciprocating motion by a means selected from the group consisting of: a pneumatic means, a hydraulic means, a wireless electrical actuation device and a wired electrical actuation device.

15. The tube cutting device of claim 14, wherein the reciprocating motion is performed following a direction perpendicular to an axial direction of the tube(40).

16. The tube cutting device of claim 1, wherein both the holding unit(10) and the cutting unit(20) are mounted on a frame(30), comprising:
a lower layer(310), formed at a lower portion of the frame(30) to be provided for the cutting unit(20) to disposed thereon; and
an upper layer(320), formed at an upper portion of the frame(30) to be provided for the holding unit to disposed thereon.

17. The tube cutting device of claim 16, wherein the frame(30) can be driven to perform a reciprocating motion while bringing along both the holding unit(10) and the cutting unit(20) to move synchronously.

18. The tube cutting device of claim 16, wherein two openings(311,321) are formed respectively on the frame(30) at positions corresponding respectively to the holding unit(10) and the cutting unit (20)in a manner that the tube(40) can be received inside the frame(30) through the two openings(311,321) and approached by the holding unit(10) and the cutting unit(20).

19. The tube cutting device of claim 18, wherein each of the two openings(311,321) is formed as a funnel, tapering from an edge of the frame(30) and extending toward a neighborhood of any one of the holding unit (10)and cutting unit whichever it is corresponding to.

20. The tube cutting device of claim 18, wherein a one-way bearing(340) is arranged at a position near the mouth(3110) of each funnel-shaped opening(311,321) in a manner that the one-way bearing(340) is enabled to only open for allowing the tube(40) to enter its corresponding opening while acting as a block for securing the received tube(40) in the frame(30).

21. The tube cutting device of claim 16, wherein a protective cover(330) is mounted on the frame(330) at a position corresponding to the cutting unit(20) in a manner that the cutting unit(20) is enveloped by the protective cover(3340) for blocking the spattering of debris resulting from the tube cutting operation.

22. The tube cutting device of claim 21, wherein a one-way door(331) is formed on the protective cover(330) in a manner that the one-way door(331) is enabled to only open for allowing the tube(40) to enter the protective cover(330) and thus reach the cutting unit(20) while acting as a block for securing the received tube(40) inside the protective cover. (330)

23. The tube cutting device of claim 1, wherein the control unit is connected to the holding unit(10) and the cutting unit(20) in respective in a manner selected from the group consisting of a wireless manner and a wired manner.

24. The tube cutting device of claim 1, wherein the control unit is programmed by a control software, used for executing functions of actuating, parameter configuring, displacement setting, and so on.

25. The tube cutting device of claim 1, further comprises:
a monitoring unit, used for monitoring the statuses of the holding unit(10) and the cutting unit(20) while transmitting results of the monitoring to the control unit.

26. The tube cutting device of claim 25, wherein the control unit further comprises: a displace device, used for displaying the monitoring results.

27. The tube cutting device of claim 25, wherein the monitoring unit is connected to the control in a manner selected from the group consisting of a wireless manner and a wired manner.

28. The tube cutting device of claim 1, further comprises:
an illumination unit, used for providing the holding unit(10) and the cutting unit(20) with a specific amount of illumination.

29. The tube cutting device of claim 1, further comprises:
an imaging unit, for imaging actuations of the holding unit(10) and the cutting unit(20).

30. The tube cutting device of claim 29, wherein the imaging unit is a device selected from the group consisting of a camera and a camcorder.

31. The tube cutting device of claim 1, wherein both the holding unit(10) and the cutting unit(20) are water-proof.

32. The tube cutting device of claim 1, wherein both the holding unit(10) and the cutting unit(20) are capable of resisting to a specific hydraulic pressure.

33. The tube cutting device of claim 1, wherein both the holding unit(10) and the cutting unit(20) are designed with a specific acid and alkali resistance.

34. A tube cutting method, comprising the steps of:
(a) using a movable clipping part for holding and pulling to move a tube axially by a specific length;
(b) driving a holding unit(10) to move for enabling the same to clipped upon the tube at a designated position thereof; and
(c) driving a cutting unit(20) to perform a tube cutting operation upon the tube.

35. The tube cutting method of claim 34, wherein the specific axial-moving length of the tube(40) is specified by a control unit.

36. The tube cutting method of claim 34, the designated position of the tube(40) where the holding unit(10) is clipped thereto is specified by a control unit.

37. The tube cutting method of claim 34, wherein during the driving of the cutting unit(20) to cut the tube, at which position of the tube(40) the cutting unit(20) is going to cut is decided and specified with respect to the knowledge of the position of the tube where the movable clipping part is clipped thereto.

38. The tube cutting method of claim 34, further comprises the step of:
(d) using the movable clipping part to hold and move the tube(40) to a temporal-storage location, after the driving of the cutting unit(20) to cut the tube(40) of step (c) is being performed.

39. The tube cutting method of claim 38, wherein a storage tank is placed at the temporal-storage location for receiving the tube being processed the tube cutting operation of step (c).

40. The tube cutting method of claim 39, wherein the storage tank is moveable.

41. The tube cutting method of claim 34, wherein both the holding unit(10) and the cutting unit(20)are mounted on a frame(30) in a manner that both the holding unit(10) and the cutting unit(20) can be bring along to move synchronously as the frame is driven to perform a reciprocating motion.

42. The tube cutting method of claim 41, wherein the frame(30) further comprises:
a lower layer(31), formed at a lower portion of the frame(30) to be provided for the cutting unit to disposed thereon; and
an upper layer(32), formed at an upper portion of the frame(30) to be provided for the holding unit(10) to disposed thereon.

43. The tube cutting method of claim 34, wherein the actuations of the holding unit(10), the cutting unit(20), the movable clipping part are all being controlled by a control unit.

44. The tube cutting method of claim 43, wherein the control unit is programmed by a control software, used for executing functions of actuating, parameter configuring, displacement setting, and so on.

45. The tube cutting method of claim 34, wherein the clipping of the holding unit(10) upon the tube(40) in the step (b) is enabled by the cooperation of a fixing part(21) and a mobile part(12) of the holding device as the mobile part(12) is capable of moving reciprocatively in relative to the fixing part(21).

46. The tube cutting method of claim 45, wherein the mobile part(12) is driven to perform a reciprocating motion by a means selected from the group consisting of: a pneumatic means, a hydraulic means, a wireless electrical actuation device and a wired electrical actuation device.

47. The tube cutting method of claim 45, wherein the reciprocating motion of the mobile part(12) is performed following a direction perpendicular to an axial direction of the tube(40).

48. The tube cutting method of claim 34, wherein the cutting of the cutting unit(20) upon the tube(40) in the step (c) is enabled by the cooperation of a fixing part(21) and a mobile part(12) of the holding device as the mobile part(12) is capable of moving reciprocatively in relative to the fixing part(21).

49. The tube cutting method of claim 48, wherein the mobile part(12) is driven to perform a reciprocating motion by a means selected from the group consisting of: a pneumatic means, a hydraulic means, a wireless electrical actuation device and a wired electrical actuation device.

50. The tube cutting method of claim 48, wherein the reciprocating motion of the mobile part(12) is performed following a direction perpendicular to an axial direction of the tube(40).
